# EUROPEAN PATENT APPLICATION

(11) **EP 2 244 453 A2**
(43) Date of publication of application: **27.10.2010**
(21) Application number: 10154200.9
(22) Date of filing: 22.02.2010
(51) Int. Cl.: H04N 1/00

(54) **Display management system**

(30) Priority: 25.02.2009 JP 2009042852
(71) Applicant: Konica Minolta Business Technologies, Inc., Tokyo 100-0005 (JP)
(72) Inventor: Kishi, Shinobu, 100-0005 Tokyo (JP)
(74) Representative: Henkel, Feiler & Hänzel

(57) **Abstract**

A display management system including an apparatus executing specified functions; and a server connected communicatably with the apparatus,
wherein the apparatus including:
a display section; and a detecting section detecting a depressed position on a screen of the display section,
wherein the server sends to the apparatus a display data of an operation screen for displaying;
the apparatus receives the display data, displays the operation screen in conformance to the display data on the display section, and sends to the server a coordinate information indicating the depressed position detected by the detecting section during the display of the operation screen;
the server receives the coordinate information, specifies an operation button corresponding to the coordinate information, and sends an instruction to execute the function assigned to the operation button to the apparatus; and
the apparatus receives an execution instruction and executes the function specified by the execution instruction.

## Description

### RELATED APPLICATION

This application claims priority to Japanese Patent Application No. 2009-042852 filed on February 25, 2009 and all the contents of the application shall be incorporated here by reference.

### TECHNICAL FIELD

The present invention relates to a display management system wherein an apparatus displays an operation screen according to the display data provided by a server.

### BACKGROUND

In various forms of apparatuses wherein an operation screen is displayed and operation is received from a user, the operation screen is customized for each user to improve operativity.

For example, in one of the conventionally used apparatuses, a user is certificated, and the language, function and character size on the display screen are then switched in response to the certificated user (Japanese Unexamined Patent Application Publication No. 2002-344681).

Another example is an apparatus wherein the screen information for user is registered for each user and the screen for this user is displayed on the display section in response to the result of user certification (Japanese Unexamined Patent Application Publication No. 2007-55099).

In still another example, a display screen is received from a server. For example, the language used by a user is identified by user certification. If this language is not found in the relevant apparatus, the server is searched for this language, and the corresponding language is downloaded, whereby the language displayed on the operation section is selected (Japanese Unexamined Patent Application Publication No. 2006-235186).

In a further example, the operation screen of the multi-functional peripheral provided with a plurality of functions such as a copying function and printer function is displayed on the screen of the PC (personal computer) connected via the network. The coordinate information indicating the position of the operation performed on the PC operation screen is sent to the multi-functional peripheral from the PC. Then the multi-functional peripheral is operated by reading the operation instructions given by the coordinate information (Japanese Unexamined Patent Application Publication No. 2007-1237).

To ensure supply of the operation screen best suited to each user flexibly selected from among a wide choice of options, it is preferred to receive display data for the operation screen from a server.

However, mere supply of the display data for the operation screen from the server will increase the processing load, because the apparatus is required to make a correct recognition and analysis of the information on the operations performed by the user for the operation screen.

In view of the problems described above, it is an object of the present invention to provide a display management system wherein display data is supplied to an apparatus from a server, whereby a great variety of display can be performed on the operation screen, and the apparatus is allowed to perform operations according to the operation instruction without having to analyze the operation information.

### SUMMARY

One aspect of the present invention is a display management system including an apparatus executing specified functions; and a server connected communicatably with the apparatus,
wherein the apparatus including:
a display section; and a detecting section detecting a depressed position on a screen of the display section,
wherein the server sends to the apparatus a display data of an operation screen for displaying on the display section; then the apparatus receives the display data, displays the operation screen in conformance to the display data on the display section, and sends to the server a coordinate information indicating the depressed position detected by the detecting section during the display of the operation screen; then the server receives the coordinate information, specifies an operation button corresponding to the coordinate information, and sends an instruction to execute the function assigned to the operation button to the apparatus; and then the apparatus receives an execution instruction and executes the function specified by the execution instruction.

### BRIEF DESCRIPTION OF THE DRAWINGS

Fig. 1 is an explanatory diagram representing an example of the system configuration of the display management system as an embodiment of the present invention;
Fig. 2 is a block diagram representing the overall structure of the multi-functional peripheral as an apparatus included in the display management system as an embodiment of the present invention;
Fig. 3 shows an overall structure of the server included in the display management system as an embodiment of the present invention;
Fig. 4 is a flow diagram showing the operation of the multi-functional peripheral for receiving information on the display or operation on the operation display section;
Fig. 5 is a flow diagram showing the operation of the server;
Fig. 6 is a sequence diagram illustrating the operations of the multi-functional peripheral and server before the copying operation is performed subsequent to various forms of setting operations, and the transition of the operation screens appearing on the display section of the multi-functional peripheral;
Fig. 7 is a front view showing an example of the screen for setting the Enable/Disable selection;
Fig. 8 is a front view showing an example of the transfer setting screen;
Fig. 9 is a flow diagram showing the operation of the server associated with the display screen for each user;
Fig. 10a is a front view showing a copying job setting screen associated with a user A, and a copying job setting screen corresponding to a user B;
Fig. 10b is a front view showing a copying job setting screen associated with a user A, and a copying job setting screen corresponding to a user B;
Fig. 11 is an explanatory diagram showing a failure when a search command is sent directly from the multi-functional peripheral to the search server;
Fig. 12 is an explanatory diagram showing the search sequence executed by the display management system as an embodiment of the present invention;
Fig. 13 is an explanatory diagram showing the search sequence when the server also has the functions of a search server in the display management system as an embodiment of the present invention; and
Fig. 14 is an explanatory diagram showing an example of the system configuration wherein the multi-functional peripheral and server communicate with each other according to the direct connection communication method.

### DESCRIPTION OF THE PREFERED EMBODIMENT

The following describes the embodiment of the present invention with reference to the drawing:

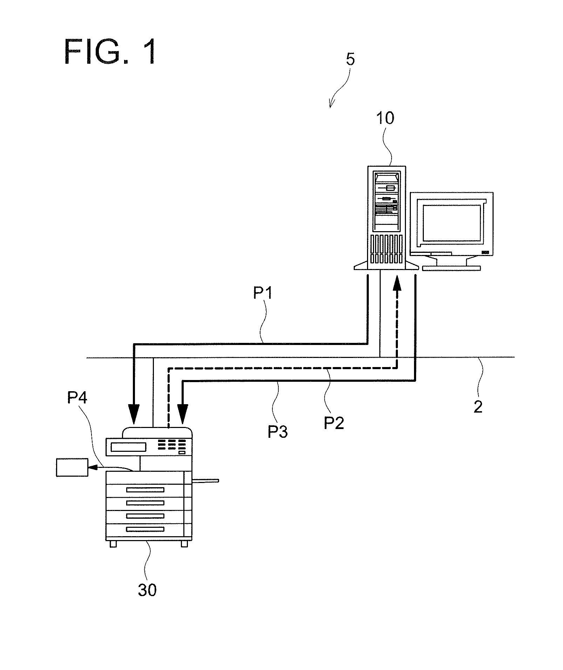

Fig. 1 is an explanatory diagram representing an example of the system configuration of the display management system 5 as an embodiment of the present invention. The display management system 5 includes the server 10 and multi-functional peripheral 30 as an apparatus for displaying the screen in conformance to the display data received from the server 10, wherein the server 10 and multi-functional peripheral 30 are connected so as to communicate with each other via the communication route such as a network 2.

The multi-functional peripheral (MFP) 30 has:
a copying function of optically reading a document image and printing the reproduced image on a recording sheet;
a scanning function of storing in a file the document image data having been read and sending this data to the external terminal;
a printing function of forming on a recording sheet the image of the printing job received from an external terminal such as a personal computer, and outputting this image; and
a facsimile function for sending and receiving image data.

The multi-functional peripheral 30 includes a display section and a detecting section (so-called touch panel) for detecting the depressing (contacted) position on the screen of this display section. The display management system 5 ensures that the display data of the operation screen displayed on the display section of the multi-functional peripheral 30 is sent from the server 10 to the multi-functional peripheral 30 (P1). Having received the display data, the multi-functional peripheral 30 displays the operation screen conforming to this display data on the display section, and sends to the server 10 the coordinate information indicating the depression position detected by the detecting section during the display on this operation screen (P2). Having received the coordinate information, the server 10 specifies the operation button associated with this coordinate information and sends to the multi-functional peripheral 30 the command (execution instruction) of the function assigned to the operation button (P3). Having received the command, the multi-functional peripheral 30 performs the operation related to the function of this command (e.g., copying function) (P4). The server 10 can also be arranged in such a way that the display data of the next screen conforming to the specified operation is sent to the multi-functional peripheral 30.

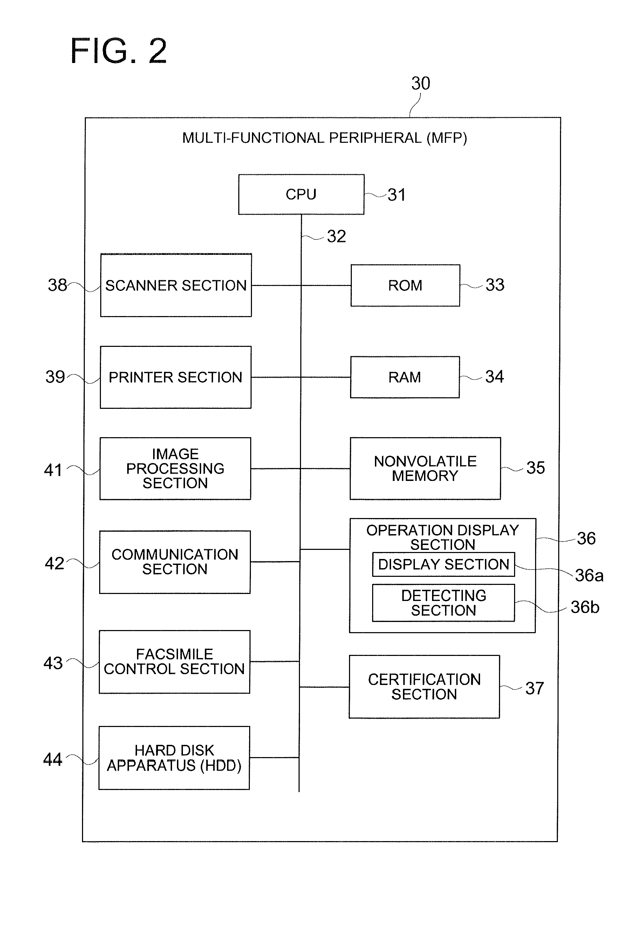

Fig. 2 is a block diagram representing the overall structure of a multi-functional peripheral 30. The multi-functional peripheral 30 has a CPU (Central Processing Unit) 31 as a control section for administrative control of the operation of the multi-functional peripheral 30. A ROM (Read Only Memory) 33, RAM (Random Access Memory) 34, nonvolatile memory 35, operation display section 36, certification section 37, scanner section 38, printer section 39, image processing section 41, communication section 42, facsimile control section 43, and hard disk apparatus (HDD) 44 are connected to the CPU 31 through a bus 32.

The ROM 33 stores various forms of programs. The CPU 31 performs processing in conformance to these programs, whereby various functions of the multi-functional peripheral 30 are implemented. The RAM 34 is a random access memory employed as a work memory for temporary storage of various forms of data at the time of the CPU 31 running the program, an image memory for storing image data or a communication buffer for temporary storage of the data for transmission and reception.

The nonvolatile memory 35 is a rewritable memory that retains the data stored therein even if the power has been turned off. The nonvolatile memory 35 stores various forms of settings that can be updated, user information, user certification information, apparatus ID, system information, address information (such as IP (Internet Protocol) address) of the multi-functional peripheral 30 and server 10, and others.

The operation display section 36 includes the LCD (Liquid Crystal Display) as a display section 36a for displaying various forms of operations screen in conformance to the display data, and a touch panel as a detecting section 36b provided on the screen to detect the coordinate position having been depressed. User operations are detected by the detecting section 36b. In addition, the operation display section 36 includes a numeric keypad and character input keys.

The certification section 37 performs the function of certificating the use of the multi-functional peripheral 30. For example, it receives the input of the user ID and password from the operation display section 36, and checks it with the user certification information registered in advance, whereby user certification is performed. Further, the certification section 37 can also be arranged in such a way that it communicates with a radio card for individual certification owned by the user located close to the multi-functional peripheral 30, and reads out the user information from this card, whereby user certification is performed.

The scanner section 38 optically reads a document and acquires image data. The scanner section 38 includes, for example:
a light source for applying light to the document;
a line image sensor for receiving the reflected light and reading one line across the document;
a moving device for sequentially moving the read-out position of line unit along the document;
an optical path including a lens and mirror for leading to the line image sensor the light reflected from the document so that an image is formed; and
a conversion section for ensuring that the analog image signal outputted by the line image sensor is converted into the digital image data.

The printer section 39 prints the image conforming to the image data on a recording sheet. In this case, the printer section 39 includes a recording sheet conveying apparatus, photoreceptor drum, charging apparatus, laser unit, development apparatus, transfer and separation apparatus, cleaning apparatus and fixing apparatus. The printer section 39 is designed as a so-called laser printer that forms an image using electrophotographic process. The printer of other type can also be used.

The image processing section 41 performs processing of rasterizer to convert the print data received from an external terminal into the image data (bit map data), processing of compressing or decompressing the image data, processing of data encryption and decryption, and processing of image rotation.

The communication section 42 communicates with the server 10 through such a communication route as a network 2, and sends or receives display data, coordinate information and various other forms of data. Communication is also performed with an external terminal such as a PC through the communication section 42. Further, the communication section 42 can also communicate with the server 10 by direct connection thereto, without using a network as an intermediary.

The facsimile control section 43 provides communication control in the transmission and reception of a facsimile, and calls origination (dialing), calls termination, connects with a telephone line.

The hard disk apparatus 44 is a nonvolatile and high-capacity storage apparatus. The hard disk apparatus 44 incorporates various forms of screen display data to be displayed on the display section 36a of the operation display section 36 when there is a communication failure with the server 10.

In the multi-functional peripheral 30, the operation of the job (copying job) related to the copying function, for example, is performed as follows: A document is read by the scanner section 38, and the image data having been read is compressed by the image processing section 41. After that, the image data is stored in the hard disk apparatus 44. The stored image data is read out sequentially in the order of output and is decompressed by the image processing section 41. After that, the image data is transferred to the printer section 39, and the corresponding to the decompressed image data is formed on a recording sheet and is outputted by the printer section 39. Copying operation is performed according to the settings from the user, wherein these settings comprises the settings of the conditions for executing the copying job, for example, the choice between double-sided copying and single sided copying, choice between color copying and monochromatic copying, document size, orientation, reduction ratio, density and others.

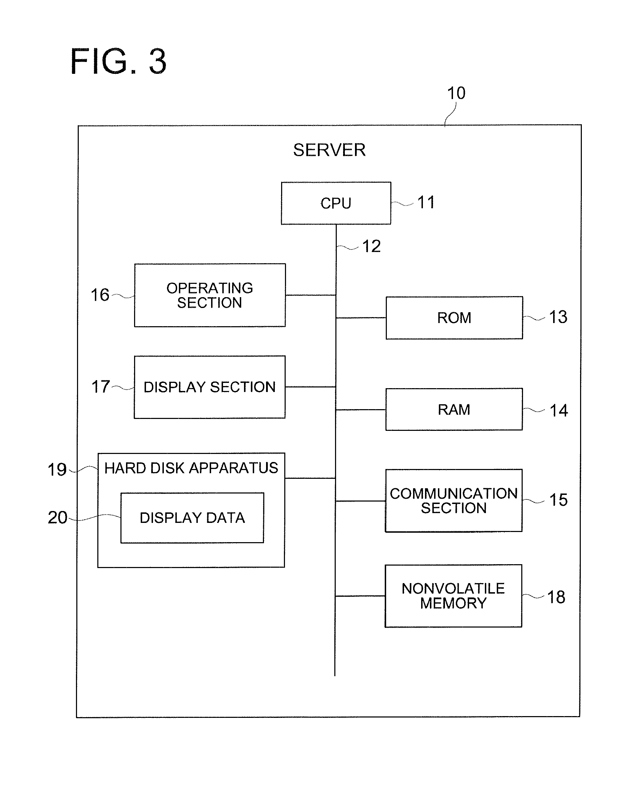

Fig. 3 shows an overall structure of the server. The server 10 includes a ROM 13, RAM 14, communication section 15, operation section 16, display apparatus 17, nonvolatile memory 18, hard disk apparatus 19 which are connected to the CPU 11 through the bus 12.

The ROM 13 stores various forms of program to be executed by the CPU 11 and various forms of fixed data. The RAM 14 is used as a work memory for temporary storage of various forms of data at the time of program execution by the CPU 11, and as a communication buffer for temporary storage of data to be transmitted and received.

The communication section 15 communicates with the multi-functional peripheral 30 through such a communication route as the network 2 to send and receive the display data, coordinate information, and various other forms of data. The communication section 15 is also used for communication with such an external terminal as a PC. The communication section 15 can also communicate with the multi-functional peripheral 30 by direct connection thereto, without using a network as an intermediary.

The operation section 16 includes a keyboard, mouse (pointing device) and others, and receives operations such as registration, updating and deletion for the multi-functional peripheral 30 as the destination to which the display data is transferred, and other operations. The display apparatus 17 includes a liquid crystal display, and displays various forms of screen such as an operation screen, setting screen, and alarm screen.

The nonvolatile memory 18 stores the registration of the display data transfer destination, and operation information specified according to the coordinate information received from the multi-functional peripheral 30. The hard disk apparatus 19 stores various forms of screen display data 20 to be sent to the multi-functional peripheral 30.

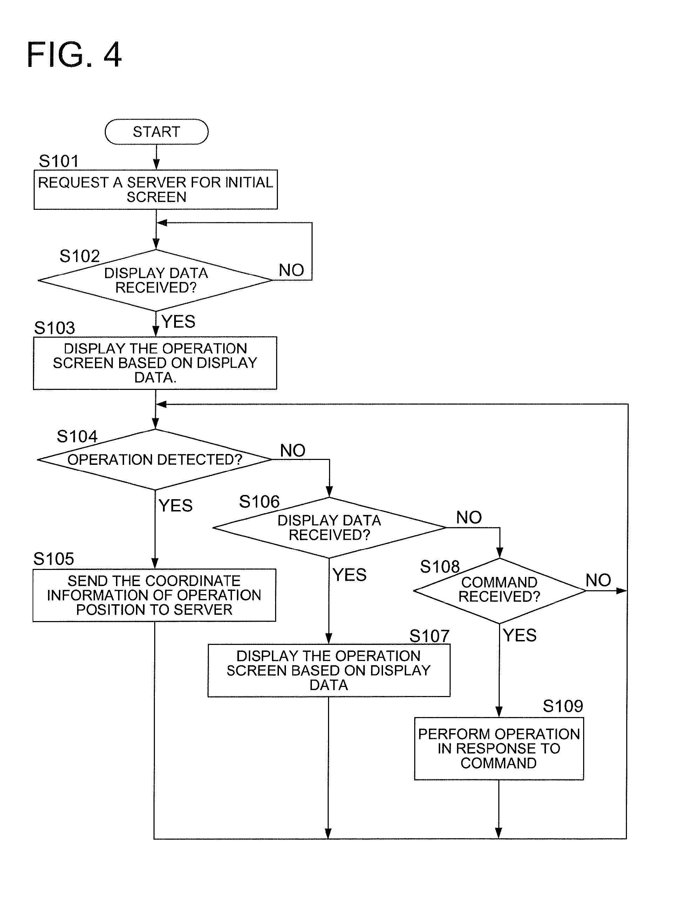

Fig. 4 shows the operation of the multi-functional peripheral 30 for receiving information on the display or operation on the operation display section 36. The CPU 31 of the multi-functional peripheral 30 sends to the server 10 the initial screen request for requesting transmission of the display data on the initial screen (initial operation screen) (Step S101). The address information of the server 10 as a receiver is registered in the nonvolatile memory 35 in advance. The initial screen request is sent to the server 10, for example, in the process of initialization after the power of the multi-functional peripheral 30 is turned on. It should be noted that each of the data items e.g., (initial screen request and coordinate information) sent from the multi-functional peripheral 30 to the server 10 is provided with the apparatus ID of the relevant multi-functional peripheral 30. This apparatus ID ensures that the server 10 identifies the transmitter of the information having been received.

After having transmitted the initial screen request, the CPU 31 of the multi-functional peripheral 30 waits until the initial screen display data is received from the server 10. Upon receipt of the display data (Step S102: Yes), the CPU 31 uses the received display data to display the operation screen on the display section 36a (Step S103). After the operation screen has been displayed, the operation of the S109 is repeated, starting from the following Step S104.

To be more specific, if some user operation has been detected by the detecting section 36b during the process of display on the operation screen conforming to the display data received from the server 10 (Step S104: Yes), the CPU 31 receives the coordinate information indicating the operation position from the detecting section 36b, and sends this coordinate information to the server 10 (Step S105).
The apparatus ID of the multi-functional peripheral 30 is added to the coordinate information, which is transmitted.

When the next data has been received from the server 10 (Step S106: Yes), the received display data is used to display the operation screen on the display section 36a (Step S107). This procedure updates the operation screen to be displayed.

When a command (execution instruction) has been received from the server 10 (Step S108: Yes), the CPU 31 of the multi-functional peripheral 30 performs the operation conforming to this command (Step S109). For example, when the copying job execution command has been received, copying operation is performed according to the settings specified by this command.

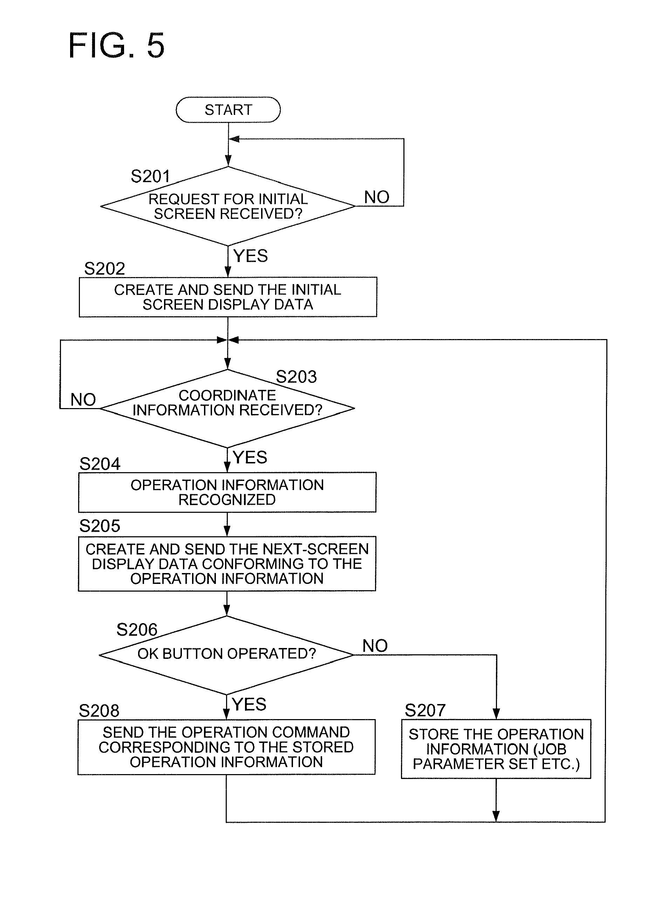

Fig. 5 shows the operation of the server 10. When the initial screen request has been received from the multi-functional peripheral 30 (Step S201: Yes), the server 10 creates the initial screen display data, and sends it to the multi-functional peripheral 30 of the transmitter of the initial screen request previously received (Step S202). The server 10 associates the apparatus ID of the multi-functional peripheral 30 with the identification information (e.g., screen ID) of the display data sent to the multi-functional peripheral 30, and stores it in the nonvolatile memory 18. This arrangement ensures identification of the operation screen currently displayed on the multi-functional peripheral 30.

After having transmitted the display data to the multi-functional peripheral 30, the server 10 waits until the coordinate information is received from the multi-functional peripheral 30 (Step S203: No). Upon receipt of the coordinate information (Step S203: Yes), the server 10 specifies the operation information indicated by this coordinate information (Step S204). For example, from the server ID stored in the nonvolatile memory 18 in the form associated with the same apparatus ID as that attached to the received coordinate information, the server 10 identifies the operation screen displayed by the multi-functional peripheral 30 as the transmitter of this coordinate information. On this operation screen, the server then identifies the operation button located at the position as indicated by the coordinate information mentioned previously, and recognizes the operation details. If there is no operation button at the position indicated by the coordinate information, the server 10 recognizes it as an invalid operation.

The server 10 then specifies the next screen in response to the operation having been recognized and creates the display data associated with the next screen. This data is sent to the multi-functional peripheral 30 as the transmitter of the coordinate information having been received previously (Step S205). For example, the next screen is the operation screen wherein the color of the operation button has been updated. The CPU 11 of the server 10 refers to the transition table of the operation screen created and stored in advance, and specifies the next screen.

The CPU 11 of the server 10 determines whether the operation recognized in Step S204 is the operation of the OK button or not. If it is not the OK button (Step S206: No), the operation information recognized this time is stored in the nonvolatile memory 18 in the form associated with the apparatus ID of the multi-functional peripheral 30 attached to the previously received coordinate information (Step S207). The system then goes back to Step S203. For example, in the case of the operation of changing to the color mode, the setting to the color mode is stored in Step S207.

If the operation information recognized in Step S204 corresponds to the operation of the OK button (Step S206: Yes), a command is created based on the operation information having been stored in the nonvolatile memory 18 in the form associated with the apparatus ID of the multi-functional peripheral 30 attached to the previously received coordinate information. This command is sent to the multi-functional peripheral 30 as the transmitter of the previously received coordinate information (Step S208). After that, the system goes back to Step S203 to continue processing.

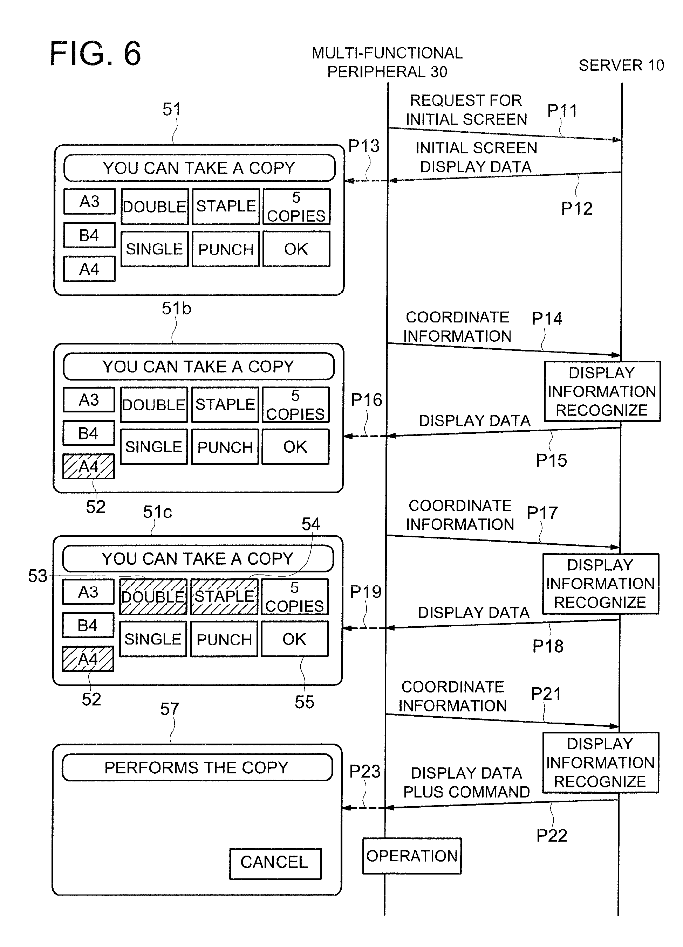

Fig. 6 is a sequence diagram illustrating the operations of the multi-functional peripheral 30 and server 10 before the copying operation is performed subsequent to various forms of setting operations, and the transition of the operation screens appearing on the display section 36a of the multi-functional peripheral 30. When the multi-functional peripheral 30 has sent the initial screen request to the server 10 (P11), the display data of the initial screen is returned to the multi-functional peripheral 30 from the server 10 (P12). According to this display data, the multi-functional peripheral 30 ensures that the operation screen 51 is displayed on the display section 36a (P13).

Upon receipt of the operation of the A4 button 52 on the operation screen 51 being displayed, the multi-functional peripheral 30 sends the coordinate information of the operation position to the server 10 (P14). Upon receipt of this coordinate information, the server 10 recognizes the operation information (of the A4 button 52) from the coordinate information and stores this operation information in the nonvolatile memory 18. At the same time, the server creates the display data showing that the A4 button 52 has been selected (e.g., the display color of the A4 button 52 has been updated to a specific color. This data is then sent to the multi-functional peripheral 30 (P15). Based on this display data, the multi-functional peripheral 30 ensures that the operation screen 51b having been selected by the A4 button 52 is displayed on the display section 36a (P16).

Similarly, in response to the operations of the double-sided copy button 53 and staple button 54, the coordinate information of the operation position is sent from the multi-functional peripheral 30 to the server 10 (P17). The operation information is recognized by the server 10, and the recognized operation information is stored in the nonvolatile memory 18. The display data of the operation screen corresponding to the operation information is created by the server 10, and is sent to the multi-functional peripheral 30 (P18). Based on the received display data, the multi-functional peripheral 30 ensures that the operation screen 51c selected by the double-sided copy button 53 and staple button 54 is displayed on the display section 36a (P19).

Upon receipt of the operation of the OK button 55 on the operation screen 51 being displayed, the multi-functional peripheral 30 sends the coordinate information of the operation position to the server 10 (P21). Upon receipt of this information, the server 10 recognizes the operation information (operation information of 55) from the coordinate information. Using the setting of "A4, double-sided copying with staple", the server 10 creates the display data of the next screen (in-copying process screen) and the copying job execution instruction (command), which are sent to the multi-functional peripheral 30 (P22). The multi-functional peripheral 30 performs the copying operation according to the received command. Based on the received display data, the in-copying process screen 57 is displayed on the display section 36a (P23).

As described above, the server 10 supplies the display management system 5 with the display data of the operation screen to be displayed on the multi-functional peripheral 30. At the same time, the coordinate information of the operation position having received from the user in the process of display of the operation screen is sent from the multi-functional peripheral 30 to the server 10. The server 10 recognizes the operation information and creates the display data of the next screen corresponding to the operation information, and the execution instruction (command) of the operation corresponding to this operation information, which are sent to the multi-functional peripheral 30. Then the multi-functional peripheral 30 performs operations according to this command. Thus, the multi-functional peripheral 30 is only required to display the display data received from the server 10 and to perform the operation in response to the command received from the server 10, without having to analyze and recognize the information on the operation performed by the user. This arrangement reduces the processing load of the multi-functional peripheral 30.

According to the display management system 5, the server 10 stores the operations performed on the multi-functional peripheral 30 before the OK button is operated. When the OK button on the apparatus has been operated, the server 10 creates the execution instruction reflecting the operations performed so far, and sends it to the multi-functional peripheral 30. Since the execution instruction reflecting a plurality of operations is created by the server 10, the multi-functional peripheral 30 is only required to operate in conformance to the execution instruction without having to analyze the individual operation. This multi-functional peripheral 30 provides a further reduction of the processing load on the part of the multi-functional peripheral 30.

And according to the display management system 5, the server 10 creates the display data of the next screen in conformance to the operation information received by the multi-functional peripheral 30, and sends it to the multi-functional peripheral 30. This arrangement allows the operation screen to be switched in conformance to the operation received from the user.

The display management system 5 ensures that the setting of the selection between Enable and Disable of the use of the operation screen (Remote screen) based on the display data provided by the server 10 can be performed by either the multi-functional peripheral 30 or the server 10.

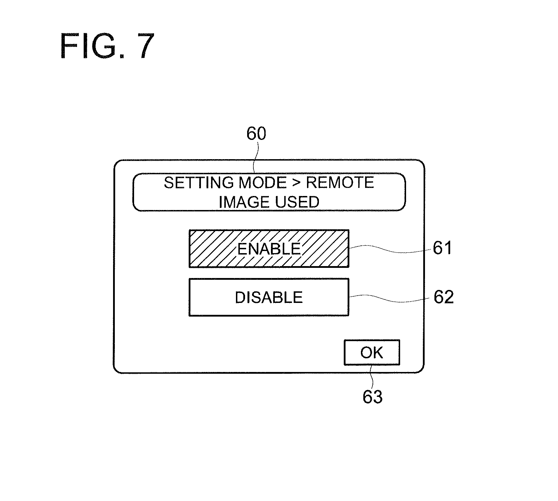

Fig. 7 is a front view showing an example of the selection screen 60 for setting the Enable/Disable selection on the use of the Remote screen from the multi-functional peripheral 30. The selection screen 60 displayed on the display section 36a of the multi-functional peripheral 30 includes a Enable button 61, Disable button 62, OK button 63 and others. When the Disable button 62 has been operated and the use of the Remote screen has been disabled, the CPU 31 of the multi-functional peripheral 30 uses the display data stored in the hard disk apparatus 44 of the apparatus itself to ensure that the operation screen and others are displayed on the display section 36a. The multi-functional peripheral 30 performs the operation by analyzing the operation information, without sending the coordinate information to the server 10.

When the Enable button 61 has been operated and use of the Remote screen has been enabled, the operations described with reference to Fig. 4 through Fig. 6 are performed. These operations include display of the operation screen conforming to the display data provided by the server 10, transmission of the coordinate information and the operation in response to the command from the server 10.

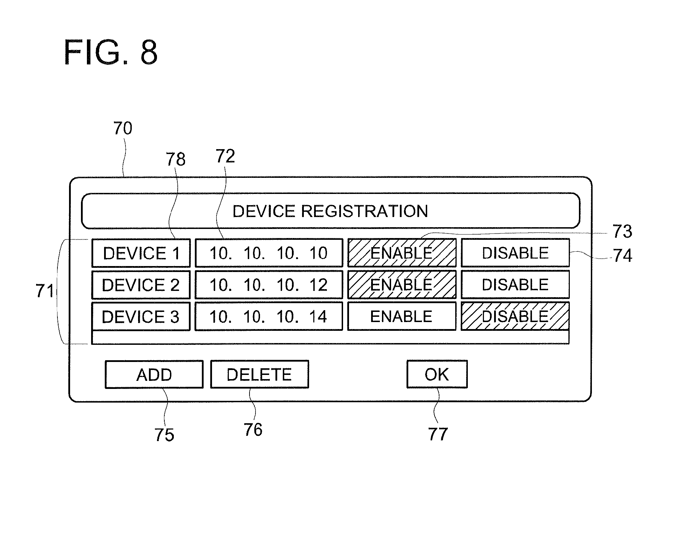

Fig. 8 shows an example of the transfer setting screen 70 for making Enable/Disable selection setting for the use of Remote screen on the part of the server 10. The transfer setting screen 70 displayed on the display apparatus 17 of the server 10 is provided with a registration device display column 71. In the registration device display column 71, for each apparatus (device) as a receiver of the display data, a device ID 78, address column 72 wherein the address of the apparatus (e.g., IP address) is displayed and settings are updated, Enable button 73 and Disable button 74 are displayed in a row (horizontal line) in the form associated with one another. An Addition button 75, Delete button 76 and OK button 77 are displayed below the registration device display column 71.

If the Addition button 74 is depressed, one new row (horizontal line) for an apparatus (device) is added in the registration device display column 71. If the Delete button 76 is operated with any one of the devices being selected in the registration device display column 71, that device is deleted from the registration list.

In the address column 72, the address of the device is inputted and displayed. When the Disable button 74 has been operated to disable use of the Remote screen, transfer of the display data to the device is disabled. In the device
wherein the use has been disabled, the operation screen and others are displayed using the display data stored in that apparatus. When the Enable button 73 is operated to enable use of the Remote screen, transfer of the display data to the device is enabled. Thus, display data is supplied to that device, coordinate information is received and analyzed, and command is sent through the operations described with reference to Fig. 4 through Fig. 6.

Then the OK button 77 has been operated, the information currently displayed on the transfer setting screen 70 is stored in the nonvolatile memory 18. Based on this registration, the server 10 performs the operation shown in Fig. 5 if the server 10 has received the initial screen request and coordinate information from the device wherein the Enable setting is selected. The server 10 does not give any response or returns error information, if the server 10 has received the initial screen request and coordinate information from the device wherein the Disable setting is selected.

The following describes the operations to be made when a customized operation screen is supplied from the server 10 to the user or to each group: In the server 10, the users (or groups) employing the display data are registered in an associated form for each display data item. In this registration, the screen ID is associated with the user ID of the user allowed to employ the display data of the operation screen identified by the screen ID.

When a user has been certificated successfully by the user certification operation by the certification section 37, the multi-functional peripheral 30 sends the information on the certificated user (e.g., user ID) to the server 10. In the present example, the initial screen request with the user ID of the certification user attached thereto is sent to the server 10.

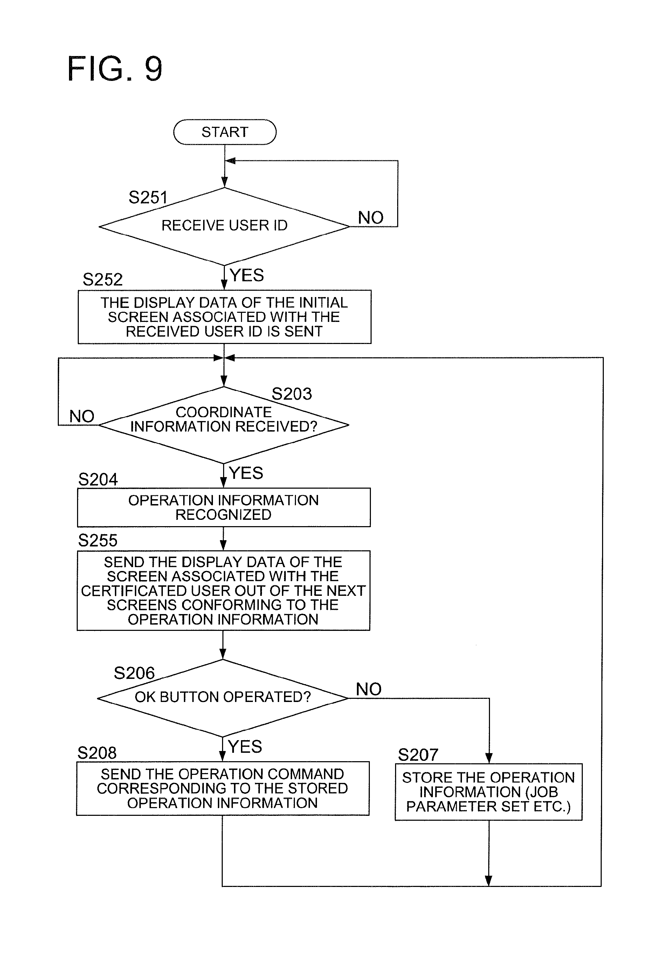

Fig. 9 shows the operation of the server 10 associated with the display screen for each user. The same processing as that of Fig. 5 is provided with the same step numeral, and the description thereof will be omitted as appropriate.

Upon receipt of the initial screen request with the user ID attached thereto from the multi-functional peripheral 30 (Step S251: Yes), the server 10 ensures that the display data of the initial screen associated with the received user ID is sent to the multi-functional peripheral 30 as the transmitter of this initial screen request (Step S252).

In Fig. 9, Step S255 is taken instead of Step S205 of Fig. 5. To be more specific, when specifying the next screen in response to the operation information having been recognized, a step is taken to select the display data of the operation screen associated with the user ID attached to the initial screen request, out of a plurality of the next screens prepared for each user ID. The selected display data is then sent to the multi-functional peripheral 30 as the transmitter of the coordinate information received in Step S203 (Step S255).

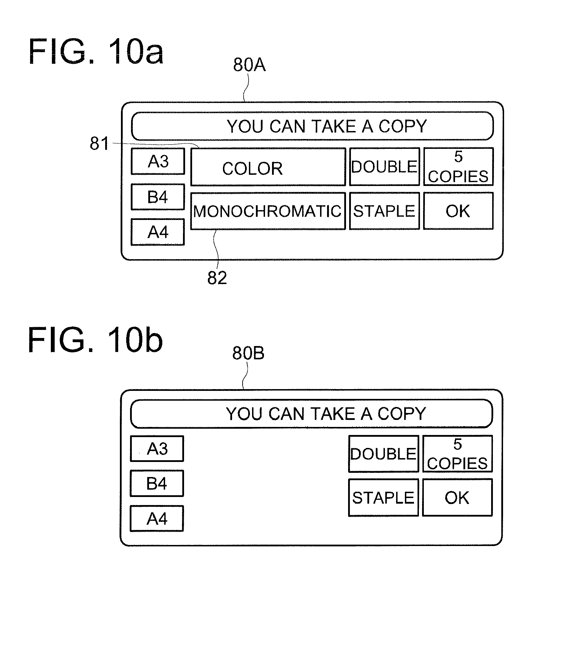

Fig. 10a shows an example of the copying job setting screen 80A associated with the user A, while Fig. 10b shows an example of the copying job setting screen 80B associated with the user B. The user A is entitled to use the color copying function, but the user B is not.

The operation buttons (color button 81 and monochromatic button 82) for selecting the color mode or monochromatic mode are displayed on the copying job setting screen 80A for user A. By contrast, these operation buttons (color button 81 and monochromatic button 82) are not displayed on the copying job setting screen 80B. Thus, the user B cannot select the color mode, and copying operation is performed only in the monochromatic mode.

As described above, when the user has been certificated by the procedure of user certification, the operation screen associated with the certificated user is displayed. This allows the operation screen to be customized for each user, or permits restriction in the number of functions which are enabled for each user. This can be done for each group instead of for each user.

The following describes the operations when there is a communication failure between the multi-functional peripheral 30 and server 10.

When a failure has occurred in the communication with the server 10, the multi-functional peripheral 30 uses the display data stored in the hard disk apparatus 44 of the apparatus itself to display various forms of operation screens. In this case, analysis of the operation information based on the coordinate information is made by the multi-functional peripheral 30, without the coordinate information being transmitted. Due to the restriction in the capacity of the hard disk apparatus 44 storing the display data, the screen customized for each user is not displayed. The operation screen which is a default screen for the apparatus is displayed for all users.

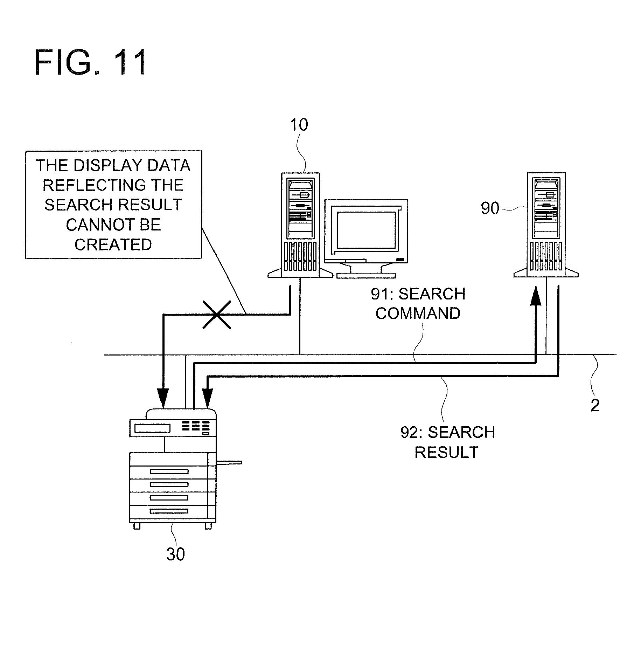

The following describes the search operation using a search server and LDAP (Lightweight Directory Access Protocol): As shown Fig. 11, when the search command 91 is directly sent from the multi-functional peripheral 30 to the search server 90, the search result 92 is returned from the search server 90 to the multi-functional peripheral 30.
Thus, this search result cannot be reflected on the display data provided by the server 10.

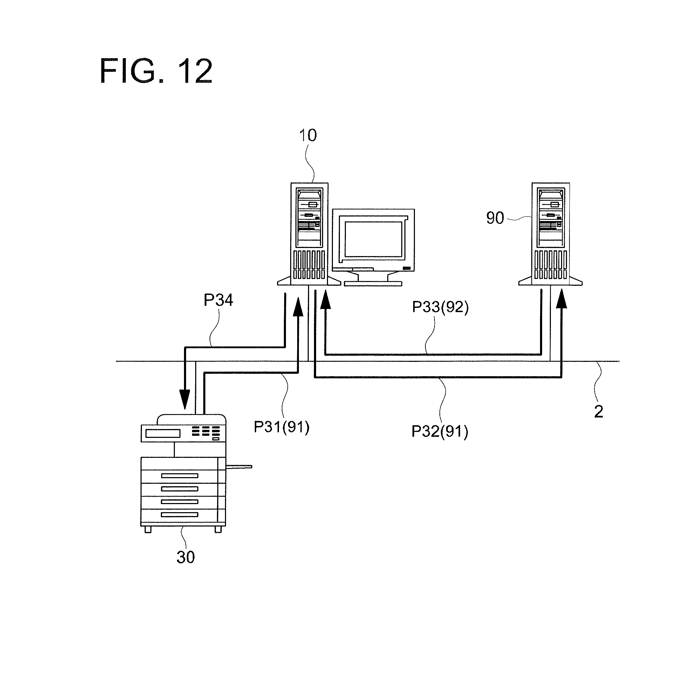

In the display management system 5 of the present embodiment, as shown in Fig. 12, a search command is sent to the search server 90 through the server 10 for inquiry. To put it in more detail, the multi-functional peripheral 30 sends to the server 10 (P31) the search command 91 including the request for transfer. The server 10 transfers this search command 91 to the search server 90 (P32). The search server 90 returns the search result 92 to the server 10 (P33). Upon receipt of the search result 92, the server 10 creates the display data of the operation screen using this search result reflected therein, and sends this display data to the multi-functional peripheral 30 (P34). The server 10 is configured to give back to the multi-functional peripheral 30 the search result data together with the display data with the search result reflected therein. This enables use of this search result for the purposes other than display on the multi-functional peripheral 30.

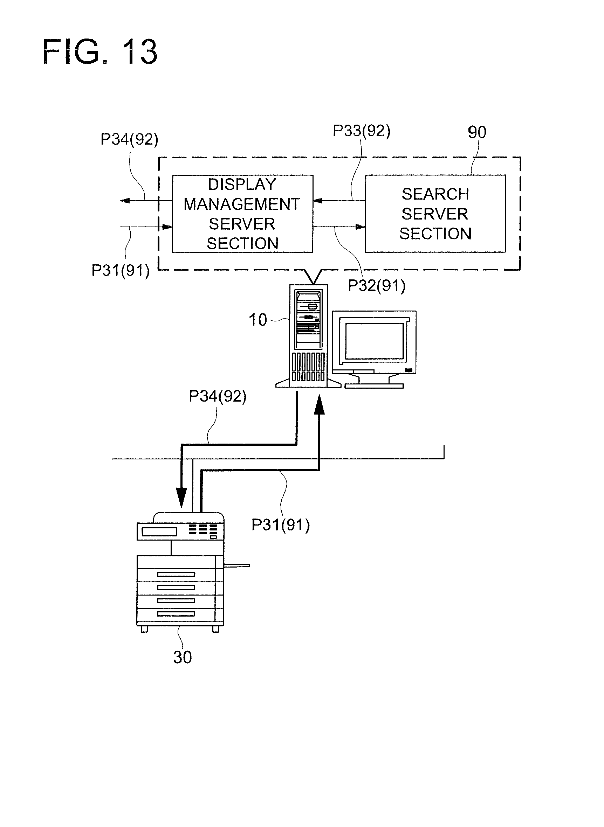

Fig. 13 shows the search sequence when the server 10 also has the functions of a search server 90. Processing corresponding to the P32 and P33 in Fig. 12 is performed within the server 10. Otherwise, Fig. 13 is the same as Fig. 12, and a further description will be omitted.

The embodiments of the present invention have been described with reference to diagrams. It is to be expressly understood, however, that the specific structure of the present invention is not restricted thereto. The present invention can be embodied in a great number of variations with appropriate modification or additions, without departing from the technological spirit and scope of the invention claimed.

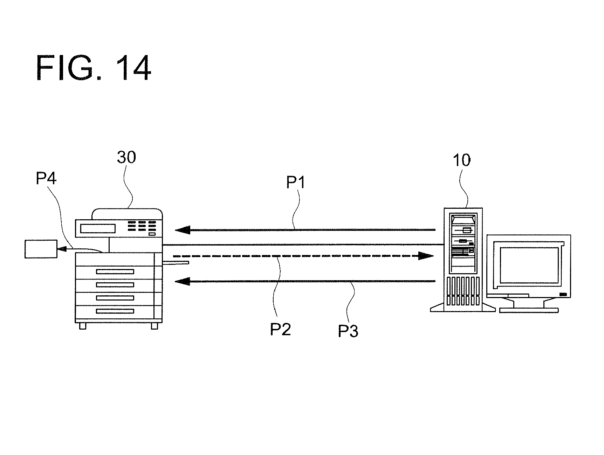

For example, as shown in Fig. 14, the multi-functional peripheral 30 and server 10 can also be configured to communicate with each other in a method of direction connection. The communication details of the P1 through P4 in Fig. 14 are the same as those of the P1 through P4 in Fig. 1. In such a direct connection method, use of the display management system 5 is enabled in an environment wherein network connection is not required or cannot be made. For example, in a library or a small-scale commercial outlet, network connection cannot be made or is not required in many cases. In such cases, communication according to the direction connection method ensures implementation of a less costly system configuration.

In the operation shown in Fig. 4 and Fig. 5, the operation screen (display data) for transmission to the multi-functional peripheral 30 can be designed to be different according to the apparatus ID of the multi-functional peripheral 30. To be more specific, the server 10 sends the display data of the customized operation screen for each apparatus ID. To put it in more detail, the server 10 ensures that the apparatus ID and the screen ID of each screen used in the multi-functional peripheral 30 of the apparatus ID are stored in the form associated each other for each apparatus ID. For example, it is also possible to arrange such a configuration that the operation screen (display data) of the screen ID associated with the same apparatus ID as that attached to the initial screen request is sent to the multi-functional peripheral 30.

When inputting the information for user certification using the operation display section 36 of the multi-functional peripheral 30, the display data stored in the hard disk apparatus 44 of the multi-functional peripheral 30 can be as the display data for the input screen of the user certification information used. The display data provided by the server 10 can be employed.

In the latter case, the following arrangement can also be used: For example, the server 10 returns the display data of the user certification information input screen in response to the initial screen request from the multi-functional peripheral 30, and receives the input information for this screen from the multi-functional peripheral 30. The server 10 performs user certification. If the user has been certificated, the display data of the operation screen for the certificated user is sent to the multi-functional peripheral 30 thereafter. The user certification information input screen can be sent as the next screen when logged out.

In the embodiment, the operation information prior to operation of the OK button is stored in the nonvolatile memory 18. When the OK button has been operated, the execution instruction (command) including the operation information heretofore is created and is sent to the multi-functional peripheral 30. It is also possible to arrange such a configuration that the information indicating the details of the operation is sent from the server 10 to the multi-functional peripheral 30 every time the operation has been received. For example, when the double-sided copy button has been operated, the information indicating double-sided copying instruction is sent from the server 10 to the multi-functional peripheral 30. Upon receipt of this information, the multi-functional peripheral 30 can operate in such a way as to change the setting of the parameter value for job execution, for example, according to this information.

The following arrangement can be used preferably: The input information that cannot be expressed by coordinate information, as exemplified by the input information having been inputted using the numeric keypad or alphabet keys in the multi-functional peripheral 30, can be sent from the multi-functional peripheral 30 to the server 10 in the form of the code information such as character code. The server 10 creates the display data of the operation screen reflecting the contents of the input information. This data is sent to the multi-functional peripheral 30 and is displayed.

The display data stored in the hard disk apparatus 44 of the multi-functional peripheral 30 can be restricted to the data related to the basic operation screen.

In the embodiment, the multi-functional peripheral 30 is used as an example to describe the apparatus that displays the display data after receiving from the server 10. Without being restricted to the multi-functional peripheral 30, the present invention is applicable to any apparatus which that is provided with a display section 36a and detecting section 36b and which executes some form of processing in response to the operation information received from the user through the detecting section 36b.

## Claims

1. A display management system comprising:
an apparatus executing specified functions; and
a server connected communicatably with the apparatus,
wherein the apparatus comprising:
a display section; and
a detecting section detecting a depressed position on a screen of the display section,
wherein the server sends to the apparatus a display data of an operation screen for displaying on the display section; then
the apparatus receives the display data, displays the operation screen in conformance to the display data on the display section, and sends to the server a coordinate information indicating the depressed position detected by the detecting section during the display of the operation screen; then
the server receives the coordinate information, specifies an operation button corresponding to the coordinate information, and sends an instruction to execute the function assigned to the operation button to the apparatus; and then
the apparatus receives an execution instruction and executes the function specified by the execution instruction.

2. The display management system of claim 1,
wherein the apparatus is selectable whether displayed or not the operation screen is in conformance to the display data received from the server on the display section.

3. The display management system of claim 1,
wherein the server registers the apparatus as a destination of sending the display data and the registration is updateable.

4. The display management system of claim 1,
wherein the apparatus certificates an user using the apparatus, and
the server sends to the apparatus the display data of the operation screen associated with the certificated user.

5. The display management system of claim 1,
wherein the server stores the operation information of the operation button when the specified operation button is not an OK button, and sends to the apparatus the execution instruction created according to the stored operation information when the specified operation button is an OK button.

6. The display management system of claim 1,
wherein the server sends to the apparatus the display data of a next operation screen in response to the operation of the specified operation button.

7. The display management system of claim 1,
wherein:
the apparatus sends to the server a request for inquiry to a search server when the terminal executes the inquiry to the server, and the function of displaying a result of search; and
the server sends an inquiry to the search server, creates the display data of a screen for displaying the result of search received from the search server and sends the display data to the apparatus when the server receives the request of inquiry.

8. The display management system of claim 1,
wherein the apparatus has a storage section to store the display data and, displays the operation screen on the display section according to the display data stored in the storage section when there is a failure in communication with the server.

9. The display management system of claim 1,
wherein the apparatus and server are connected via a network.

10. The display management system of claim 1,
wherein the apparatus and server are connected in a communication system wherein the apparatus and server are directly connected with each other.
